# EUROPÄISCHE PATENTANMELDUNG

(11) **EP 1 524 461 A1**
(43) Veröffentlichungstag der Anmeldung: **20.04.2005**
(21) Anmeldenummer: 04023967.5
(22) Anmeldetag: 07.10.2004
(51) Int. Cl.: F16J 15/34, E02F 3/36, E02F 3/40

(54) **Hydraulischer Drehmotor**

(30) Priorität: 15.10.2003 DE 20315873 U
(71) Anmelder: Rädlinger Maschinen- und Anlagenbau GmbH, 93413 Cham-Windischbergerdorf (DE)
(72) Erfinder: Paa, Thomas, 92444 Rötz (DE)
(74) Vertreter: Winter, Brandl, Fürniss, Hübner, Röss, Kaiser, Polte Partnerschaft Patent- und Rechtsanwaltskanzlei

(57) **Zusammenfassung**

Ein hydraulischer Drehmotor umfaßt ein Gehäuse 1 und eine in diesem Gehäuse drehbar gelagerte Achse 2, wobei zwischen Gehäuse und Achse an beiden Enden der Achse je eine Ringdichtung 3 aus einem elastischen Material so in einer radialen Öffnung im Gehäuse und/oder der Achse aufgenommen und im zusammengebauten Zustand komprimiert ist, daß die Achse fluiddicht im Gehäuse gelagert ist. Achsial außen neben jeder der beiden Ringdichtungen ist je eine Laufwerkdichtung angeordnet, die zwei metallische Gleitringe 5A, 5B und zwei elastische verformbare Runddichtungen 6A, 6B umfaßt, die im zusammengebauten Zustand so komprimiert sind, daß sie die Gleitringe achsial und/oder radial gegeneinander und gegen das Gehäuse bzw. die Achse verspannen, so daß die Laufwerkdichtung die zugehörige Ringdichtung gegen die Außenumgebung abdichtet.

## Beschreibung

Die vorliegende Erfindung betrifft einen hydraulischen Drehmotor für Baumaschinen.

Hydraulische Drehmotoren sind gegenüber Kraftstößen robust und werden daher in Baumaschinen als Aktuatoren eingesetzt, insbesondere, um ein Arbeitsgerät wie beispielsweise einen Baggerlöffel oder einen Greifer gegenüber einem Stiel bzw. Arm der Baumaschine oder zwei Arme gegeneinander zu bewegen.

Hierzu ist beispielsweise das Gehäuse des hydraulischen Drehmotors am Stiel der Baumaschine und die Achse des Drehmotors direkt oder über einen Schnellwechsler an einem Arbeitsgerät wie einem Baggerlöffel befestigt, wie dies in der EP 0 703 321 B1 beschrieben ist, die hiermit vollständig in die Offenbarung der vorliegenden Erfindung einbezogen wird. Auch die umgekehrte Konstruktion, i.e. Verbindung der Achse des Drehmotors mit dem Stiel und des Gehäuses des Drehmotors mit dem Arbeitsgerät, ist möglich.

Bei einem solchen hydraulischen Drehmotor ist seine Achse fluiddicht und drehbar im Gehäuse gelagert. Zur Abdichtung des unter hohem wechselnden Druck stehenden Arbeitsfluids weist das Gehäuse oder die Achse eine radiale Aussparung auf, in die eine elastisch verformbare Ringdichtung eingelegt ist. Im zusammengebauten Zustand wird diese Ringdichtung zwischen Gehäuse und Achse zusammengepreßt und dichtet so den radialen Spalt zwischen beiden Bauteilen ab.

Beim Einsatz der Baumaschine wird auch der hydraulische Drehmotor mit abrasiven Stoffen, Sand, Feinstschlamm und dergleichen beaufschlagt. Solche Umgebungsbedingungen schädigen die elastische Ringdichtung und führen zum Versagen der Dichtung und damit des Drehmotors.

Zur Lösung dieses Problems ist es bekannt, in Axialrichtung außen, i.e. der Umgebung zugewandt, einen Abstreifer vorzusehen. Dieser umfaßt ebenfalls einen elastisch verformbaren Ring, der in einer radialen Aussparung des Gehäuses oder der Welle aufgenommen und im zusammengebauten Zustand zusammengepreßt ist. Der Abstreifer unterscheidet sich von der oben beschriebenen Ringdichtung durch sein Material und seine geringere Kompression, da er nicht dem hohen Arbeitsfluiddruck, sondern nur den von außen angreifenden Stoffen (Schlamm etc.) widerstehen muß.

Solche Abstreifer verschleißen jedoch aufgrund der agressiven Umgebunsgbedingungen, denen sie ausgesetzt sind, relativ rasch, je nach Einsatz in wenigen Wochen bis Jahren, und müssen dann ausgetauscht werden, um die Ringdichtung weiterhin zu schützen. Dies bedingt jedesmal die Stilllegung der Baumaschine, den Aus- und Wiedereinbau des Drehmotors und den Austausch des Abstreifers.

Aufgabe der vorliegenden Erfindung ist es daher, einen hydraulischen Drehmotor für Baumaschinen zur Verfügung zu stellen, der die oben beschriebenen Nachteile vermeidet.

Diese Aufgabe löst der Gegenstand des Anspruchs 1.

Ein erfindungsgemäßer hydraulischer Drehmotor für Baumaschinen umfaßt in an sich bekannter Weise ein Gehäuse und eine in diesem Gehäuse drehbar gelagerte Achse, wobei zwischen Gehäuse und Achse an beiden Enden der Achse je eine Ringdichtung aus einem elastischen Material in einer radialen Aussparung im Gehäuse und/oder der Achse aufgenommen und im zusammengebauten Zustand komprimiert ist, so daß die Achse fluiddicht im Gehäuse gelagert ist.

Axial außen neben jeder der beiden Ringdichtungen ist je eine Laufwerkdichtung angeordnet, die zwei metallische Gleitringe und zwei elastisch verformbare Runddichtringe umfaßt, die im zusammengebauten Zustand so komprimiert sind, daß sie die Gleitringe axial und/oder radial gegeneinander verspannen, so daß die Laufwerkdichtung die zugehörige Ringdichtung gegen die Außenumgebung abdichtet.

Da bei den Laufringdichtungen die metallischen Gleitringe aufeinander gleiten, während die elastisch komrpimierten Runddichtringe relativ zum jeweiligen Gleitring und der Aufnahme im Gehäuse bzw. der Achse ortsfest sind, ist der Verschleiß dieser Dichtung extrem gering, so daß sie wesentlich seltener, im Idealfall nie (sog. Lebensdauerdichtung), ausgetauscht werden muß, was unerwünschte Stillstandszeiten der Baumaschine zum Ersetzen der Dichtungen verringert bzw. gänzlich vermeidet. Trotzdem wird die arbeitsfluiddichte Ringdichtung gegenüber agressiven Umgebungsbedingungen wie abrasiven Stoffen, Feinstschlamm etc. ausreichend geschützt.

Es hat sich überraschend gezeigt, daß an sich bekannte Laufringdichtungen, die bislang aufgrund von Mikrobewegungen der Runddichtringe bei wechselnder Drehrichtung und aufgrund der relativ hohen Haftreibung vorwiegend bei Dauerrotationsbetrieb mit nur einer Rotationsrichtung eingesetzt wurden, auch bei hydraulischen Drehmotoren für Baumaschinen einsetzbar sind, bei denen die Drehgeschwindigkeit relativ gering ist, keine Volldrehungen vorkommen, die Drehrichtung oft wechselt und viele Anfahrvorgänge mit damit verbundenen Haft-Gleit-Übergängen der Dichtungen anfallen.

In einer ersten bevorzugten Ausführung der vorliegenden Erfindung umfaßt die Achse des Drehmotors zwei an ihren Enden vorzusgweise lösbar befestigte Flansche, die vorteilhafterweise Teil eines Schnellwechslers oder eines Arbeitsgeräts sein können, der bzw. das somit an der Achse des Drehmotors befestigt wird. Jeder Flansch weist eine kegelförmige Öffnung auf, die sich zum Gehäuse des Drehmotors hin radial erweitert. Spiegelsymmetrisch hierzu weist auch das Gehäuse an der dieser Öffnung gegenüberliegenden Stelle eine kegelförmige Öffnung auf, die sich zu besagtem Flansch der Achse hin radial erweitert.

Diese beiden kegelförmigen Öffnungen nehmen je einen elastischen Runddichtring einer Laufwerkdichtung auf. Radial innen ist neben jedem Runddichtring ein zugehöriger metallischer Gleitring angeordnet, dessen dem Runddichtring zugewandte Außenumfangsfläche in ähnlicher Weise wie die Öffnung kegelförmig ausgebildet ist und der auf seiner dem anderen Gleitring zugewandten Stirnseite eine kranzförmige Gleitfläche aufweist.

Im zusammengebauten Zustand ist der radiale Abstand zwischen der Innenumfangsfläche der kegelförmigen Öffnung im Gehäuse bzw. Flansch und der Außenumfangsfläche des Gleitringes geringer als die radiale Wandstärke des unverformten Runddichtringes, so daß dieser komprimiert wird und den Gleitring in radialer Richtung nach innen und in axialer Richtung gegen den gegenüberliegenden Gleitring verspannt. Je nach Neigung der kegelförmigen Öffnung bzw. Außenumfangsoberfläche kann die Verspannkraft stärker in axialer oder radialer Richtung wirken, wodurch der Sitz der Laufwerkdichtung in der Aufnahme des Gehäuses bzw. Flansches und die Anpreßkraft der Gleitflächen geeignet eingestellt werden können. Als Speziallfall kann die Neigung der Kegelflächen auch 90° betragen, i.e., die Außenumfangsflächen der Gleitringe stehen senkrecht bezüglich der Drehachse und die Kompressionskraft wirkt vollständig axial.

Wenn das Arbeitsgerät bzw. der Schnellwechlser von der Achse entfernt und ein anderes Arbeitsgerät bzw. ein anderer Schnellwechsler an dieser befestigt werden soll, muß die Laufwerkdichtung bei der ersten Ausführung erneut montiert werden. Trotzdem sind die hierzu nötigen Montagezeiten kürzer als die Standzeiten, die zum Wechsel herkömmlicher Abstreifer in regelmäßigen Abständen anfallen.

In einer zweiten bevorzugten Ausführung weist die Achse an ihren beiden Enden je eine Öffnung auf, die einen Runddichtring aufnimmt. Radial außen neben diesem Runddichtring ist ein erster Gleitring angeordnet, der an seiner radialen Außenumfangsfläche eine Gleitfläche aufweist. Radial spiegelsymmetrisch hierzu sind ein zweiter Gleitring und ein zweiter Runddichtring in einer Öffnung im Gehäuse angeordnet, wobei im zusammengebauten Zustand beide Runddichtringe komprimiert sind und die Gleitringe in radialer Richtung gegeneinander verspannen.

Weitere Aufgaben, Merkmale und Vorteile der vorliegenden Erfindung ergeben sich aus den Unteransprüchen und den nachfolgend beschriebenen Ausführungsbeispielen. Hierzu zeigt:
Fig. 1 einen hydraulischen Drehmotor gemäß der ersten Ausführung im Teilschnitt; und
Fig. 2 eine vergrößerte Darstellung einer Laufwerkdichtung aus Fig. 1.

Der hydraulische Drehmotor umfaßt ein Gehäuse 1 und eine Achse 2, die drehbar im Gehäuse gelagert ist.

In je einer radialen Öffnung ist an beiden Enden der Achse eine Ringdichtung 3 so im Gehäuse 1 aufgenommen, daß sie im hier dargestellten zusammengebauten Zustand komprimiert ist und so den vom Gehäuse und der Achse gebildeten Innenraum zur Umgebung hin so abdichtet, daß zwischen Gehäuse und Achse kein Arbeitsfluid austritt.,

Die Achse 2 weist an ihren beiden Stirnseiten mittels Schrauben (nicht dargestellt) befestigte Flansche 4 auf, mittels derer ein Arbeitsgerät oder ein Schnellwechlser (nicht dargestellt) an der Achse 2 befestigt ist. Die Flansche 4 können einstückig oder ihrerseits mit dem Arbeitsgerät bzw. Schnellwechlser verbindbar ausgeführt sein. Mit den selben Schrauben ist auch ein Befestigungsdeckel 100 an der Achse befestigt.

Jeder Flansch weist auf seiner dem Gehäuse zugewandten Seite eine kegelförmige Öffnung 41 auf, die sich zum Gehäuse hin radial erweitert. In dieser Öffnung ist ein erster Gleitring 5a angeordnet, der eine sich kegelförmig zum Gehäuse hin erweiternde Außenumfangsfläche 51a und eine daran anschließende, dem Gehäuse zugewandte Gleitfläche 52a aufweist, die senkrecht zur Drehachse angeordnet ist. Zwischen der Innenumfangsfläche der Öffnung 41 und der Außenumfangsfläche 51a des Gleitrings 5a ist ein erster elastischer Runddichtring 6a, beispielsweise aus Kautschuk oder dergleichen, so aufgenommen, daß er im zusammengebauten Zustand komprimiert ist und aufgrund der kegelförmigen Flächen 41 bzw. 51a, auf denen er sich abstützt, zwischen Flansch und Gleitring eine Kraft in radialer Richtung nach innen und in axialer Richtung hin zum Gehäuse erzeugt.

Axial spiegelsymmetrisch hierzu weist das Gehäuse 1 eine kegelförmige Öffnung 11 auf, die sich nach außen hin radial erweitert. In dieser Öffnung ist ein zweiter Gleitring 5b angeordnet, der eine sich kegelförmig nach außen hin erweiternde Außenumfangsfläche 51b und eine daran außen anschließenden Gleitfläche 52b aufweist. Zwischen der Innenumfangsfläche der Öffnung 11 und der Außenumfangsfläche 51b ist ein zweiter Runddichtring 6b so aufgenommen, daß er im zusammengebauten Zustand komprimiert ist und aufgrund der kegelförmigen Flächen, auf denen er sich abstützt, eine Kraft in radialer Richtung nach innen und in axialer Richtung nach außen zwischen Flansch und Gleitring erzeugt. Vorteilhafterweise sind die Öffnungen 11 bzw. 41 in Gehäuse bzw. Flansch, die Gleitringe 5a bzw. 5b und die Runddichtringe 6a bzw. 6b axial spiegelsymmetrisch.

Hierdurch werden die beiden einander zugewandten Gleitringe 5a bzw. 5b an ihren Gleitflächen 52a, 52b aufeinander gepreßt und dichten so den Dichtring 3 gegen die Umgebung, insbesondere gegen abrasive Stoffe, Feinstschlamm oder dergleichen ab.

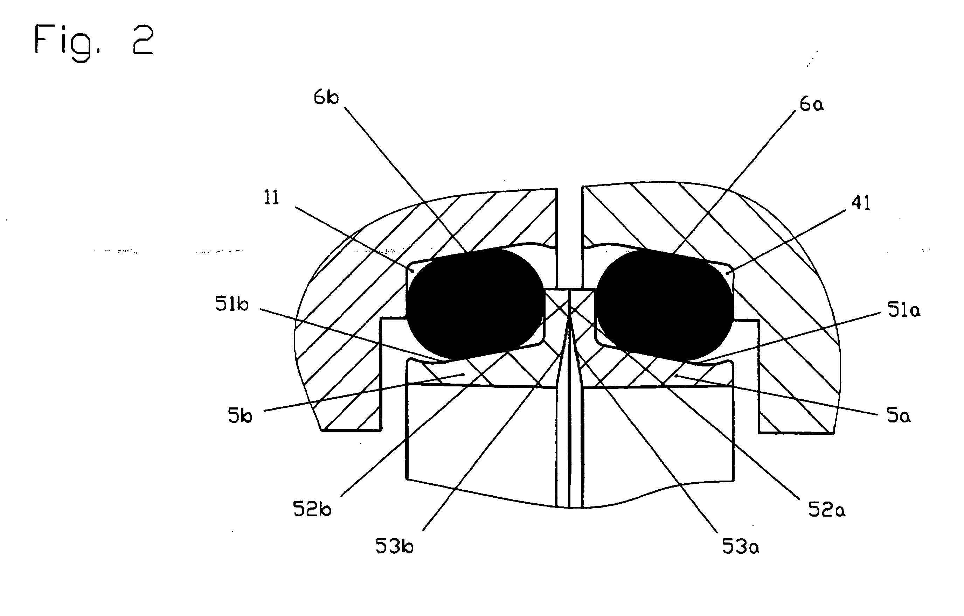

Dreht sich die Achse 2 im Gehäuse 1, so gleiten die Gleitflächen 52a und 52b der Gleitringe 5a bzw. 5b aufeinander. Da beide Gleitringe aus Metall, beispielsweise Hartguß oder Wälzlagerstahl, bestehen, verschleißen die Gleitflächen kaum. Zudem werden durch die Axialkomponenten der elastischen Verspannkräfte beide Gleitringe bei Verschleiß selbstständig nachgestellt. Hierzu weisen die Gleitflächen 52a, 52b radial innen konisch ausgebildete Bereiche 53a bzw. 53b auf, wie dies in Fig. 2 zu sehen ist. Werden die senkrecht zur Drehachse stehenden Gleitflächen 52a bzw. 52b durch Verschleiß in axialer Richtung abgetragen, ermöglicht der axiale Abstand zwischen den konischen Bereichen 53a, 53b ein Nachstellen der Dichtung durch die Axialkomponente der Kompressionskräfte der verformten Runddichtringe 6a, 6b.

Somit ist stets eine gleichbleibende Abdichtung gewährleistet.

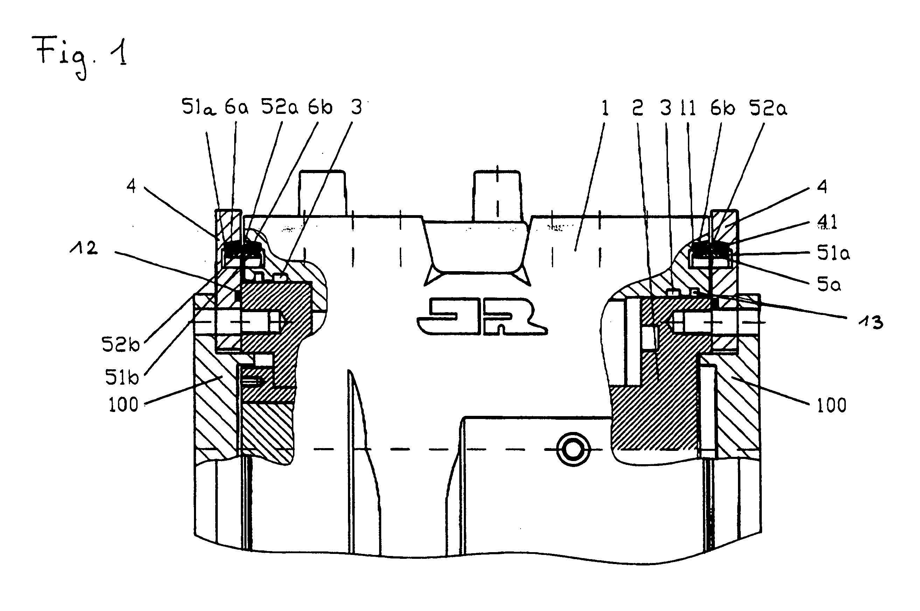

Zur zusätzlichen Abdichtung können, wie in Fig. 1 gezeigt, weitere Abdichtelemente einzeln oder in Kombination vorhanden sein: exemplarisch ist hier ein O-Ring 12 in einer entsprechenden ringförmigen Aussparung in der der Achse 2 zugewandten Stirnseite jedes Flansches 4 so angeordnet, daß er durch die angrenzende Stirnseite der Achse 2 komprimiert wird und so den Raum zwischen den zugewandten Oberflächen von Flansch 4 und Achse 2 radial abdichtet. Dies verhindert u.a., daß Stoffe aus der Umgebung radial von innen (beispielsweise über den Befestigungsdeckel 100) zwischen Flansch und Achse und schließlich zur Ringdichtung 3 gelangen und diese schädigen. Da hier keine Relativbewegung auftritt, reicht hierfür ein O-Ring oder dergleichen aus.

Zum anderen ist axial außen neben jeder Ringdichtung 3 ein herkömmlicher Abstreifer 13 in einer radialen Aussparung des Gehäuses aufgenommen. Dieser Abstreifer dient u.a. als zweite Sicherungsdichtung neben der Laufwerkdichtung, falls diese versagt, bei einem ausgetauschten Arbeitsgerät nicht vorhanden ist oder auf der Baustelle ausgetauscht werden muß, so daß in der Zwischenzeit keine abrasiven Stoffe oder dergleichen die Ringdichtung 3 schädigen. Da die erfindungsgemäße Laufwerkdichtung die abrasiven Stoffe sowohl von der Ringdichtung 3 als auch dem Abstreifer 13 fernhält, erhöht sich die Lebensdauer des Abstreifers 13 gegenüber herkömmlichen Konstruktionen. Hierzu kann auch der Anpreßdruck des Abstreifers reduziert sein.

## Patentansprüche

1. Hydraulischer Drehmotor für Baumaschinen, der umfaßt:
ein Gehäuse (1);
eine in diesem Gehäuse drehbar gelagerte Achse (2);
wobei zwischen Gehäuse und Achse an beiden Enden der Achse je eine Ringdichtung (3) aus einem elastischen Material so in einer radialen Öffnung im Gehäuse und/oder der Achse aufgenommen und im zusammengebauten Zustand komprimiert ist, daß die Achse fluiddicht im Gehäuse gelagert ist;
**dadurch gekennzeichnet, daß**
axial außen neben jeder der beiden Ringdichtungen je eine Laufwerkdichtung angeordnet ist, die
zwei metallische Gleitringe (5a, 5b) ; und
zwei elastisch verformbare Runddichtringe (6a, 6b)
umfaßt, die im zusammengebauten Zustand so komprimiert sind, daß sie die Gleitringe axial und/oder radial gegeneinander und gegen das Gehäuse bzw. die Achse verspannen, so daß die Laufwerkdichtung die zugehörige Ringdichtung gegen die Außenumgebung abdichtet.

2. Hyraulischer Drehmotor nach Anspruch 1, **dadurch gekennzeichnet, daß** an den Stirnseiten der Achse (2) je ein Flansch (4) angeordnet ist, der eine Öffnung (41) aufweist, in der ein Gleitring (5a) und ein Runddichtring (6a) der Laufwerkdichtung aufgenommen ist.

3. Hydraulischer Drehmotor nach Anspruch 2,
**dadurch gekennzeichnet, daß** die Innenumfangsfläche der Öffnung (41) im Flansch (4) sich radial zum Gehäuse hin erweitert.

4. Hydraulischer Drehmotor nach Anspruch 2 oder 3, **dadurch gekennzeichnet, daß** der im Flansch aufgenommene Gleitring (5a) eine sich zum Gehäuse hin radial erweiternde Außenumfangsfläche (51a) und eine sich daran anschließende Gleitfläche (52a) aufweist.

5. Hydraulischer Drehmotor nach Anspruch 4,
**dadurch gekennzeichnet, daß** die Gleitfläche (52a) im wesentlichen senkrecht zur Drehachse steht und/oder radial innen einen konischen Bereich (53a) aufweist.

6. Hydraulischer Drehmotor nach einem der Ansprüche 2 bis 5, **dadurch gekennzeichnet, daß** das Gehäuse in axial spiegelsymmetrischer Weise äquivalent ausgebildete Elemente enthält, insbesondere eine Öffnung (11), in der ein Gleitring (5b) und ein Runddichtring (6b) der Laufwerkdichtung aufgenommen ist, wobei sich die Öffnung (11) insbesondere zum Flansch hin radial erweitert, der im Gehäuse aufgenommene Gleitring (5b) eine sich zum Flansch hin radial erweiternde Außenumfangsfläche (51b) und eine sich daran anschließende Gleitfläche (52b) aufweist, diese Gleitfläche (52b) im wesentlichen senkrecht zur Drehachse steht und/oder radial innen einen konischen Bereich (53b) aufweist.
